# EUROPÄISCHE PATENTSCHRIFT

(11) **EP 1 363 113 B1**
(45) Veröffentlichungstag und Bekanntmachung des Hinweises auf die Patenterteilung: **05.07.2006**
(21) Anmeldenummer: 03008744.9
(22) Anmeldetag: 17.04.2003
(51) Int. Cl.: G01J 5/08, G01J 5/02

(54) **Vorrichtung zur Temperaturmessung mit einer Lichtleitfaser**
Temperature measurement device using an optical fiber
Dispositif de mesure de température utilisant une fibre optique

(30) Priorität: 13.05.2002 DE 20207493 U
(43) Veröffentlichungstag der Anmeldung: 19.11.2003
(73) Patentinhaber: Bartec GmbH, 97980 Bad Mergentheim (DE)
(72) Erfinder: Barlian, Reinhold, 97980 Bad Mergentheim (DE); Böhm, Alfred, 94234 Viechtach (DE)
(74) Vertreter: Wunderlich, Rainer

(56) Entgegenhaltungen:
- EP-A- 1 199 583
- PATENT ABSTRACTS OF JAPAN Bd. 009, Nr. 327 (P-415), 21. Dezember 1985 (1985-12-21) -& JP 60 151524 A (JIYAPAN SENSAA KOOPOREISHIYON:KK), 9. August 1985 (1985-08-09)
- PATENT ABSTRACTS OF JAPAN Bd. 012, Nr. 370 (P-767), 5. Oktober 1988 (1988-10-05) & JP 63 121721 A (JAPAN ELECTRONIC IND DEV ASSOC<JEIDA>; others: 01), 25. Mai 1988 (1988-05-25)
- PATENT ABSTRACTS OF JAPAN Bd. 016, Nr. 571 (P-1459), 11. Dezember 1992 (1992-12-11) -& JP 04 221723 A (ANRITSU CORP), 12. August 1992 (1992-08-12)
- PATENT ABSTRACTS OF JAPAN Bd. 010, Nr. 225 (P-484), 6. August 1986 (1986-08-06) & JP 61 061023 A (SUMITOMO ELECTRIC IND LTD), 28. März 1986 (1986-03-28)
- PATENT ABSTRACTS OF JAPAN Bd. 010, Nr. 225 (P-484), 6. August 1986 (1986-08-06) & JP 61 061024 A (SUMITOMO ELECTRIC IND LTD), 28. März 1986 (1986-03-28)

## Beschreibung

Die Erfindung betrifft eine Vorrichtung zur faseroptischen Temperaturmessung mit einer Lichtleitfaser, welche einen Strahlungs-Einkoppelbereich und einen einem Detektor zugeordneten Strahlungs-Auskoppelbereich aufweist, wobei die Lichtleitfaser im Infrarot (IR)-Spektralbereich mit hoher Transmission ausgebildet ist, und einer Kompensationseinrichtung zur Berücksichtigung der thermischen Eigenstrahlung der Lichtleitfaser bei der Temperaturmessung, welche einen als Draht ausgebildeten temperaturabhängigen Leiter aufweist, der um die Lichtleitfaser unter Ausbildung von Wicklungen vorgesehen ist.

Eine gattungsgemäße Vorrichtung ist aus der JP 61-061023 A bekannt.

Die JP 60-151524 A beschreibt ein faseroptisches Strahlungsthermometer mit einer Korrektureinrichtung zur Umgebungstemperaturkorrektur. Die Korrektureinrichtung weist eine zweite Faser auf, die parallel zur Messfaser angeordnet ist, und die seitens des zu vermessenden Objektes optisch verschlossen ist. Die beiden Fasern sind jeweils einem Detektor zugeordnet. Die zweite Faser erlaubt es, das von der Faser selbst emittierte Infrarotlicht zu erfassen und bei der Temperaturbestimmung zu berücksichtigen.

Die JP 04-221723 A beschreibt einen Fotodetektor zum Nachweis geringer Lichtintensitäten, der ebenfalls eine optische Temperaturkompensationsfaser aufweist, die mit einer Messfaser thermisch verbunden ist.

Ein Infrarot-Thermometer mit zwei gleichartigen Fasern ist ferner aus der JP 63-121721 bekannt.

Die JP 61-061024 offenbart ein faseroptisches Strahlungsthermometer mit einer Vorrichtung zur Regelung der Temperatur der Messfaser.

Eine Vorrichtung zur faseroptischen Temperaturmessung ist aus der EP 0 898 158 A2 bekannt, die ein Hochtemperatur-Pyrometer beschreibt, das insbesondere zur Temperaturmessung in einer Gasturbine geeignet ist. Bei diesem Pyrometer wird in einem Hochtemperaturbereich der Messanordnung Infrarot (IR)-Strahlung in eine Lichtleitfaser eingekoppelt. Die Lichtleitfaser führt zu einem Detektor, der sich in einem Bereich befindet, in welchem gemäßigte Temperaturen herrschen.

Die Lichtleitfaser besteht gemäß der EP 0 898 158 A2 aus Quarzglas oder Saphirkristall. Derartige Lichtleitfasern sind hitzebeständig bis zu Temperaturen von ca. 1100° C bzw. 1900° C und somit für einen Einsatz im Hochtemperaturbereich geeignet. Weiterhin sind derartige Lichtleitfasern in einem Spektralbereich eines thermischen Strahlers mit Temperaturen im Hochtemperaturbereich transparent und somit für Hochtemperaturmessungen geeignet.

Allerdings weisen derartige Lichtleitfasern für eine IR-Strahlung mit einer Wellenlänge größer als typischerweise 4 µm eine sehr hohe Absorption auf. Somit sind diese Lichtleitfasern nicht dazu geeignet, IR-Strahlung in einem Spektralbereich eines thermischen Strahlers mit Temperaturen im Niedrigtemperaturbereich, d.h. typischerweise -100° C bis 400° C, zu übertragen. Pyrometer gemäß der EP 0 898 158 A2 sind daher zur Temperaturbestimmung im Niedrigtemperaturbereich ungeeignet.

Eine Vorrichtung, welche zur Temperaturbestimmung in Niedrigtemperaturbereich eingesetzt ist, ist aus der EP 1 180 669 A1 bekannt. Diese Vorrichtung betrifft eine Messanordnung zur pyrometrischen Temperaturbestimmung eines Garbehälters. Dabei ist ebenfalls ein Detektor vorgesehen, welcher von einer Wärmequelle beabstandet in einem kühleren Bereich angeordnet ist. Zur Übertragung der Wärmestrahlung zum Detektor sind rohrförmig ausgebildete IR-Leitungen vorgesehen, deren Innenflächen IR-reflektierend, z.B. goldbeschichtet, sind.

Derartige rohrförmige IR-Leitungen haben den Nachteil, dass sie nicht sehr biegsam sind, weshalb die Messanordnung nur für eine begrenzte Zahl von Messaufgaben geeignet ist. Weiterhin sind die IR-reflektierenden Innenflächen einer Alterung unterworfen, was zu einer Änderung des Reflektionsfaktors der Wände und somit der Transmission der IR-Leitung führt. Dies wiederum führt zu einer Verfälschung des Messwertes. Weiterhin ist nachteilig, dass die Strahlungsverluste in solchen IR-Leitungen relativ hoch sind, was Messungen über längere Distanz erschwert.

**Aufgabe** dder Erfindung ist es, eine Vorrichtung zur faseroptischen Temperaturmessung mit besonders hoher Messgenauigkeit zu schaffen, die insbesondere für den Niedrigtemperaturbereich, insbesondere im Bereich von ca. -100° C bis 400° C, geeignet ist, und bei der der eigentliche Detektor beabstandet vom Messpunkt in einem kühlen Bereich angeordnet werden kann.

Diese Aufgabe wird durch eine Vorrichtung mit den Merkmalen des Anspruchs 1 gelöst. Bevorzugte Ausführungsformen der Erfindung sind in den abhängigen Ansprüchen angegeben. Erfindungsgemäß ist vorgesehen, dass die Lichtleitfaser im IR-Spektralbereich, insbesondere im Bereich von etwa 2 µm bis etwa 20 µm, mit hoher Transmission ausgebildet ist.

Ein Grundgedanke der Erfindung kann darin gesehen werden, einen Lichtwellenleiter zu verwenden, welcher im Spektralbereich eines thermischen Strahlers mit Temperaturen im Niedrigtemperaturbereich eine hohe Transmission aufweist. Auf diese Weise ist es möglich, die IR-Strahlung eines Körpers mit Temperaturen von -100° C bis 400° C zu einem vom eigentlichen Messpunkt beabstandeten Detektor zu übertragen und somit zu einer relativ präzisen Temperaturmessung heranzuziehen.

Ein weiterer wichtiger Gedanke der Erfindung liegt darin, eine Kompensationseinrichtung zur Berücksichtigung einer thermischen Eigenstrahlung der Lichtleitfaser bei der Temperaturmessung vorzusehen. Die thermische Eigenstrahlung der Lichtleitfaser hängt ab von deren Eigentemperatur. Zusätzlich zur IR-Strahlung des zu vermessenden Körpers wird im IR-Spektralbereich liegende Eigenstrahlung der Lichtleitfaser von dieser zum Detektor geleitet und dort nachgewiesen. Aufgrund der thermischen Eigenstrahlung kommt es daher häufig zu einer Intensitäts- und Leistungszunahme der von der Lichtleitfaser übertragenen IR-Strahlung. Ein Messsignal des Detektors hängt somit nicht nur von der Intensität der am Messpunkt in die Lichtleitfaser einfallenden Infrarot-Strahlung ab, sondern auch von der Temperatur- oder Wärmeverteilung entlang der Lichtleitfaser. Eine erfindungsgemäße Kompensationseinrichtung, die auch unabhängig vom Spektralbereich und hoher Transmission eigenständigen Charakter hat, erlaubt es nun, das Messsignal des Detektors von Einflüssen der thermischen Eigenstrahlung der Lichtleitfaser zu bereinigen und ermöglicht somit eine besonders genaue Temperaturmessung. Die Temperaturverteilung entlang der Lichtleitfaser muss hierbei grundsätzlich nicht bekannt sein.

Vorteilhafterweise weist die Kompensationseinrichtung Mittel zur Erzeugung eines Kompensationssignals und Mittel zur Korrektur des Messsignals des Detektors mit dem Kompensationssignal auf. Hierbei können die Mittel zur Korrektur Mittel zur Verrechnung des Messsignals mit dem Kompensationssignal, insbesondere Mittel zur Differenzbildung aus diesen Signalen aufweisen. Eine solche Anordnung erlaubt die Bereitstellung eines von der Eigenstrahlung der Faser bereinigten Messsignales. Das Messsignal und das Kompensationssignal sind dabei bevorzugt Signalspannungen.

Die Kompensationseinrichtung ist geeigneterweise so ausgelegt, dass sie eine Bedämpfung der thermischen Eigenstrahlung der Lichtleitfaser in dieser Lichtleitfaser berücksichtigt, aufgrund derer Eigenstrahlung, die nahe am Detektor entsteht, stärkere Auswirkungen auf das Messsignal hat, als solche Eigenstrahlung, die weiter vom Detektor entfernt entsteht.

Grundsätzlich kann die Lichtleitfaser in einer erfindungsgemäßen Vorrichtung im IR-Spektralbereich, insbesondere im Bereich von etwa 2 µm bis etwa 20 µm, mit hoher Transmission ausgebildet sein. Besonders geeignet ist es, dass die Lichtleitfaser im Wellenlängenbereich von 4 µm bis 18 µm mit hoher Transmission ausgebildet ist, welcher für Temperaturmessungen im Niedrigtemperaturbereich besonders geeignet ist.

Generell gesehen kann jede Lichtleitfaser verwendet werden, welche im Wellenlängenbereich von etwa 2 µm bis etwa 20 µm bzw. von 4 µm bis 18 µm eine hohe Transmission aufweist. Solche Fasern können beispielsweise auch als Lichtleiter für CO₂ oder CO-Laser verwendet werden. Besonders bevorzugt ist es, dass die Lichtleitfaser eine Silberhalogenidfaser bzw. Silberhalidfaser, insbesonders eine Faser basierend auf einer festen AgCl:AgBr-Lösung ist. Derartige Lichtwellenleiter sind für die Übertragung von Strahlung im mittleren IR-Bereich besonders geeignet. Sie können beispielsweise polykristallin aufgebaut sein, wobei die Korngröße auch variabel sein kann, und können z.B. reine Kernfasern sein oder einen Mantel aufweisen.

Erfindungsgemäß kann jeder für den IR-Spektralbereich geeignete Detektor Verwendung finden, so z.B. eine Fotowiderstandszelle, ein Thermoelement, ein Bolometer oder ein Halbleiterdetektor wie z.B. eine Fotodiode. Bevorzugt wird als Detektor ein Thermopile verwendet. Dies ermöglicht besonders genaue Temperaturmessungen bei einem zugleich wirtschaftlichen Aufbau.

Vorteilhafterweise weist der Detektor ein hermetisch dichtes Gehäuse auf. Weiterhin ist es zweckmäßig, dass das hermetisch dichte Gehäuse eine Durchführung für die Lichtleitfaser aufweist und dass eine Auskoppelstelle der Lichtleitfaser innerhalb des Gehäuses vorgesehen ist. Durch diese Anordnung wird der Einfluss einer Fremdstrahlung auf den Detektor minimiert. Weiterhin wird hierdurch einer Alterung bzw. Schädigung der Lichtleitfaser im Auskoppelbereich durch den Einfall von Licht, insbesondere von sichtbarem Streulicht, entgegengewirkt. Die besonders bevorzugte Durchführung der Lichtleitfaser durch das Gehäuse stellt zudem sicher, dass Verluste von Strahlungsleistung bei der Auskopplung in den Detektor minimal sind und insbesondere keine Reflektionsverluste an einem Detektorgehäusefenster auftreten.

Geeigneterweise ist das hermetisch dichte Gehäuse mit einem Inertgas gefüllt, welches beispielsweise Stickstoff oder Argon sein kann. Alternativ kann das hermetisch dichte Gehäuse auch evakuiert sein. Durch diese alternativen Ausführungsformen ist sichergestellt, dass keine Schadgase an die Faser gelangen und somit keine Schädigung der Faser auftritt. Außerdem wird durch die bevorzugte Befüllung des Gehäuses mit einem geeigneten Gas bzw. durch das Evakuieren des Detektorgehäuses insbesondere das thermodynamische Verhalten verbessert und Absorptionsverluste der IR-Strahlungsintensität im Bereich zwischen einer Auskoppelstelle der Lichtleitfaser und dem Detektor minimiert.

Gemäß einer weiteren bevorzugten Ausführungsform der Erfindung ist in der Durchführung für die Lichtleitfaser am Gehäuse des Detektors eine erste Ferrule vorgesehen, in der die Lichtleitfaser gehaltert ist. Dies ermöglicht eine besonders einfache und somit wirtschaftliche Justierung der Lichtleitfaser.

Eine weitere vorteilhafte Ausführungsform besteht darin, dass der Abstand zwischen der Auskoppelstelle der Lichtleitfaser und einer sensitiven Schicht des Detektors so eingestellt ist, dass der aus der Lichtleitfaser austretende Strahlungskegel die Fläche der sensitiven Schicht des Detektors möglichst genau abdeckt, d.h. dass IR-Lichtstrahlen, welche die Lichtleitfaser unter einem Winkel verlassen, der kleiner ist als der Aperturwinkel, auf die sensitive Schicht fallen. Hierdurch werden die Empfindlichkeit und das Signal-Rausch-Verhältnis der Messvorrichtung verbessert.

Eine weitere Verbesserung besteht darin, dass die Lichtleitfaser außerhalb des Detektorgehäuses von einer Schutzeinrichtung, insbesondere einem Schutzrohr, umgeben ist. Hierdurch wird eine Schädigung der Lichtleitfaser durch Umgebungslicht oder durch Atmosphärengase verhindert. Entsprechend der gewünschten Anwendung der Vorrichtung kann die Schutzeinrichtung dabei z.B. biegsam und/oder hitzebeständig ausgestaltet werden. Auch kann die Schutzeinrichtung beispielsweise mit einem Inertgas gefüllt oder evakuiert sein.

Geeigneterweise wird die Lichtleitfaser im IR-Einkoppelbereich in einer zweiten Ferrule gehaltert, welche in das Schutzrohr eingepasst ist. Hierdurch wird eine besonders einfache und zugleich hermetisch dichte Befestigung eines Faserendes im Einkoppelbereich am Schutzrohr ermöglicht.

Bevorzugt wird die in der Durchführung des Gehäuses vorgesehene erste Ferrule in das Schutzrohr eingepasst. Dies ermöglicht einen besonders einfachen und zugleich hermetisch dichten detektorseitigen Abschluss des Schutzrohrs.

Besonders zweckmäßig ist weiterhin, dass die Lichtleitfaser im Einkoppelbereich ein optisches Filter aufweist. Hiermit kann zum einen eine für die Lichtleitfaser schädliche Strahlung ausgefiltert werden. Zum anderen erlaubt das Filter einen hermetisch dichten Abschluss der Lichtleitfaser im Einkoppelbereich und somit einen Schutz vor Schadgasen oder -stoffen.

Das optische Filter ist vorteilhafterweise als Bandpassfilter ausgelegt. Weiterhin wird bevorzugt, dass der Transmissionsbereich des optischen Filters in einem "atmosphärischen Fenster" liegt, d.h. in einem Wellenlängenbereich, in dem Atmosphärengase nur schwach absorbieren. Dies stellt sicher, dass keine Verfälschung der Messergebnisse durch Fremdgase oder Wasserdampf entsteht, bzw. deren Einfluss gering bleibt. Dabei ist insbesondere vorgesehen, dass das optische Filter einen Transmissionsbereich in einem "atmosphärischen Fenster" von 8 µm bis 14 µm aufweist.
Gemäß einer weiteren bevorzugten Ausführungsform der Erfindung ist das optische Filter mit einer Antireflexionsschicht versehen. Hierdurch können Reflexionsverluste im Einkoppelbereich der Lichtleitfaser vermindert werden.

Auch wird bevorzugt, das optische Filter als optisches Element, insbesonders als Linse, auszubilden. Hierdurch kann die Strahlungseinkopplung in die Lichtleitfaser bei zugleich einfacher Bauform verbessert werden. Da der minimale Durchmesser des optischen Filters im Wesentlichen durch den Durchmesser der optischen Faser bestimmt wird, kann das Filter klein und somit kostengünstig bleiben.

Eine weitere vorteilhafte Ausführungsform besteht darin, dass im Einkoppelbereich vor der Lichtleitfaser ein optisches System angeordnet ist. Dieses optische System ermöglicht eine besonders effektive Einkopplung der IR-Strahlung in die Lichtleitfaser. Bevorzugt ist dabei das optische System als polierter Kegel oder Paraboloid ausgebildet. Diese Bauform ist sehr einfach und damit kostengünstig herstellbar und erlaubt zugleich eine effektive Strahlungseinkopplung. Andere optische Systeme, wie beispielsweise Linsensysteme, sind ebenfalls einsetzbar.

Zweckmäßig ist weiterhin, dass das optische System eine im infraroten Bereich durchlässige Scheibe aufweist, die das System und/oder die Lichtleitfaser vor schädlichen Umgebungseinflüssen schützt. Bevorzugt besteht die Scheibe aus Germanium, Silizium, Saphir, oder einer Verbindung eines oder mehrerer dieser Materialien. Sie kann z.B. ein Silizium-Einkristall sein. Aber auch weitere, im Infraroten durchlässigen Materialien oder deren Verbindungen sind einsetzbar.

Ein Ausführungsbeispiel der Erfindung ist dadurch gekennzeichnet, dass die Kompensationseinrichtung zusätzlich zu den Merkmalen des Anspruchs 1 eine Kompensationsfaser aufweist, die einem Kompensationsdetektor zugeordnet ist und die im engen räumlichen und thermischen Kontakt zur Lichtleitfaser angeordnet ist. In einer solchen Anordnung kann die Eigenstrahlung der Lichtleitfaser in besonders einfacher Weise berücksichtigt werden. Die Kompensationsfaser ist bevorzugt in unmittelbarer Nähe der Lichtleitfaser, insbesondere parallel hierzu angeordnet. Hierdurch wird erreicht, dass die Temperaturverteilung entlang der Kompensationsfaser möglichst genau der Temperaturverleitung entlang der Lichtleitfaser entspricht und somit ein besonders genaues Kompensationssignal erhalten werden kann. Das Kompensationssignal kann dabei vom Kompensationdetektor erzeugt werden. Die Kompensationsfaser liegt geeigneterweise direkt an der Lichtleitfaser an. Bei der Kompenstionsfaser kann es sich um einen im IR-Bereich leitenden Lichtwellenleiter handeln und bevorzugterweise weisen die Kompensationsfaser und die Lichtleitfaser dieselbe Bauart und/oder Materialbeschaffenheit auf. Hierdurch kann ein besonders leicht zu interpretierendes Kompensationssignal erhalten werden.

Vorteilhafterweise ist die Kompensationsfaser an einem dem Kompensationsdetektor beabstandeten Ende verspiegelt und/oder verschlossen. Die Lichtleitfaser kann hingegen auf das zu vermessende Objekt gerichtet sein. Durch eine solche Anordnung wird zuverlässig erreicht, dass in der Kompensationsfaser lediglich die Eigentemperatur der Kompensationsfaser eine Strahlung erzeugt, nicht hingegen das zu vermessende Objekt. Hierdurch kann ein besonders genaues Kompensationssignal erhalten werden.

In einer besonders bevorzugten Ausführungsform der Erfindung sind der Kompensationsdetektor und der Detektor baugleich. Insbesondere kann auch ein Kompensationsdetektorgehäuse des Kompensationsdetektors die gleiche Bauform und Füllung aufweisen wie das Detektorgehäuse des Detektors. Bevorzugt sind auch eine Durchführung der Kompensationsfaser durch das Kompensationsdetektorgehäuse und eine Anordnung der Kompensationsfaser relativ zum Kompensationsdetektor baugleich zur Durchführung der Lichtleitfaser durch das Detektorgehäuse bzw. zur Anordnung der Lichtleitfaser relativ zum Detektor. Bevorzugt sind ferner sowohl der Detektor als auch der Kompensationsdetektor Thermopiles. Eine derartige Anordnung erlaubt die Erzeugung eines Kompensationssignals, das die Temperaturverteilung entlang der Lichtleitfaser besonders gut widerspiegelt. Die Temperatur des zu vermessenden Objektes kann besonders einfach durch Differenzbildung aus den Messsignalen beider Thermopiles ermittelt werden.

Eine Vorrichtung zur faseroptischen Temperaturmessung mit einem besonders einfachen Aufbau kann dadurch erhalten werden, dass der Detektor und der Kompensationsdetektor auf einem gemeinsamen Träger angeordnet, insbesondere aufgebracht sind. In einer derartigen Dualsensor-Anordnung sind sowohl der Detektor als auch der Kompensationsdetektor und somit sowohl das Messsignal als auch das Kompensationssignal den gleichen thermischen Verhältnissen unterworfen. Hierdurch wird eine besonders zuverlässige Kompensation der thermischen Eigenstrahlung der Lichtleitfaser ermöglicht. Vorzugsweise sind dabei Mittel zur optischen Trennung oder Abschattung der beiden Detektoren voneinander vorgesehen. Hiermit kann Streustrahlung reduziert werden.

Eine erfindungsgemäße Kompensationseinrichtung ist dadurch gekennzeichnet, dass sie einen temperaturabhängigen Leiter aufweist. Ein solcher temperaturabhängiger Leiter erlaubt die Erfassung der Temperaturverteilung längs der Lichtleitfaser und somit die Erzeugung des Kompensationssignals in besonders einfacher Art und Weise. Ein temperaturabhängiger Leiter weist einen temperaturabhängigen Widerstand auf, der elektronisch besonders einfach zu erfassen, auszuwerten und zum Kompensationssignal aufzubereiten ist.

Nach der Erfindung ist der temperaturabhängige Leiter als ein Draht ausgeführt. Ein solcher Draht kann in besonders einfacher Weise in die unmittelbare Nähe der Lichtleitfaser gebracht werden und somit die Temperaturverteilung längs der Lichtleitfaser besonders genau erfassen. Vorteilhafterweise ist der Draht dünn ausgebildet, insbesondere mit einem Durchmesser, der geringer ist als der Durchmesser der Lichtleitfaser. Hierdurch kann erreicht werden, dass die Flexibilität der Lichtleitfaser durch den Draht auch dann nicht beeinflusst wird, wenn dieser unmittelbar entlang der Lichtleitfaser angeordnet ist. Ferner ergeben sich bei der Verwendung eines dünnen Drahtes auch relativ hohe, elektronisch gut auswertbare Widerstandsänderungen.

In einer vorteilhaften Weiterbildung der Erfindung ist der Draht ein Nickeldraht. Ein solcher Nickeldraht weist eine hohe Temperaturbeständigkeit auf. Ferner ergeben sich bei der Verwendung von Nickel auch relativ hohe, gut auswertbare Widerstandsänderungen aufgrund seines hohen Widerstandsbeiwerts. Zudem sind Nickeldrähte vergleichsweise preiswert. Alternativ können auch Gold-, Silber-, Platin- oder weitere Metalldrähte verwendet werden, die ebenfalls einen hohen Widerstandsbeiwert und/oder eine gute Temperaturbeständigkeit aufweisen. Die Verwendung von Legierungen, die die zuvor genannten Metalle enthalten, ist ebenfalls möglich.

Grundsätzlich ist es möglich, den Draht längs der Lichtleitfaser und parallel zu dieser zu führen. Erfindungsgemäß ist es jedoch, dass der Draht um die Lichtleitfaser unter Ausbildung von Wicklungen vorgesehen ist. Durch ein solches Wickeln wird zum einen die Temperatur der Lichtleitfaser optimal erfasst und zum anderen die Drahtlänge vergrößert, was sich positiv auf den Widerstandswert und damit das erreichbare Nutzsignal auswirkt. Durch die Vergrößerung der Drahtlänge wird insbesondere der Widerstand erhöht.

Von Vorteil ist es ferner, wenn der Widerstandsdraht bifilar gewickelt wird. Eine Hinleitung und eine Rückleitung, des Drahtes können hierbei parallel verlaufen, wodurch die Drahlänge weiter vergrößert wird. Zur Vermeidung von Kurzschlüssen ist der Draht dabei bevorzugt isoliert ausgeführt.

Grundsätzlich ist es möglich, die Wicklungen des Drahtes mit gleichbleibender Ganghöhe entlang der Lichtleitfaser anzuordnen. Unter Ganghöhe ist hierbei der Abstand zweier benachbarter Wicklungen in Längsrichtung der Lichtleitfaser zu verstehen. Erfindungsgemäß ist es allerdings, dass die Wicklung des Drahtes unterschiedliche Ganghöhen aufweisen, die an das Dämpfungsverhalten der Lichtleitfaser angepasst sind. Die Strahlungsintensität in der Lichtleitfaser kann ein nichtlineares, insbesondere logarithmisches oder exponentielles Dämpfungsverhalten aufweisen. Hierdurch kann Strahlung, die an der dem Detektor abgewandten Seite der Lichtleitfaser entsteht überproportional im Vergleich zu der Strahlung gedämpft werden, die in der Nähe des Detektors entsteht. Der temperaturabhängige Leiter hingegen kann einen linearen Verlauf der Dämpfung aufweisen. Ein besonders genaues Kompensationssignal kann nun dadurch erhalten werden, dass die Ganghöhe der Wicklungen des Drahtes entsprechend dem Dämpfungsverhalten der Lichtleitfaser entlang der Lichtleitfaser variiert werden. Insbesondere kann die Wicklung entsprechend, insbesondere proportional zur Dämpfung der Faser verlaufen.

Grundsätzlich ist es möglich, den Draht direkt um die Lichtleitfaser zu wickeln. Günstigerweise ist die Lichtleitfaser jedoch von einer Hülle umgeben, die Nuten zur Aufnahme des temperaturabhängigen Leiters aufweisen kann. Aufgrund derartiger Nuten wird die Positionierung des Drahtes bei der Herstellung der Vorrichtung wesentlich erleichtert und ein Verschieben des Drahtes beim Betrieb der Vorrichtung erschwert. Die Hülle ist vorteilhafterweise thermisch gut leitend ausgeführt, so dass ein guter thermischer Kontakt zwischen der Lichtleitfaser und dem Draht hergestellt wird. Zur Vermeidung von Kurzschlüssen im Draht ist die Hülle vorzugsweise elektrisch isolierend. Bevorzugt ist die Hülle ferner biegsam.

Die Schutzeinrichtung bzw. das Schutzrohr, das die Lichtleitfaser außerhalb des Detektorgehäuses umgibt, ist bevorzugt thermisch gut isolierend ausgebildet. Dies erlaubt es, die Temperatur der Lichtleitfaser möglichst konstant zu halten und somit Beeinträchtigungen des Messsignales durch die thermische Eigenstrahlung der Faser weiter zu minimieren.

Für eine besonders gute Kompensation der thermischen Eigenstrahlung der Lichtleitfaser ist es auch möglich, dass die Kompensationseinrichtung sowohl einen temperaturabhängigen Leiter als auch eine Kompensationsfaser aufweist.

Die Erfindung wird nachfolgend anhand von bevorzugten Ausführungsformen erläutert, welche schematisch in den Zeichnungen dargestellt sind. In den Zeichnungen zeigen:
- Fig. 1: einen schematischen Axialschnitt durch eine Vorrichtung zur faseroptischen Temperaturmessung in einem Auskoppelbereich, welcher einem Detektor zugeordnet ist;
- Fig. 2: einen schematischen Axialschnitt durch eine Vorrichtung zur faseroptischen Temperaturmessung in einem Einkoppelbereich;
- Fig. 3: einen schematischen Axialschnitt durch eine Vorrichtung zur faseroptischen Temperaturmessung in einem Einkoppelbereich der ein optisches System aufweist;
- Fig. 4: einen schematischen Axialschnitt durch eine gesamte Vorrichtung mit Einkoppelbereich und Auskoppelbereich gemäß den Figuren 1 und 2;
- Fig. 5: einen schematischen Axialschnitt durch eine Vorrichtung zur faseroptischen Temperaturmessung, die eine Kompensationsfaser aufweist, in einem Auskoppelbereich;
- Fig. 6: einen schematischen Axialschnitt durch eine Vorrichtung zur faseroptischen Temperaturmessung, die eine Kompensationsfaser aufweist, in einem Einkoppelbereich;
- Fig. 7: einen schematischen Axialschnitt durch eine Vorrichtung zur faseroptischen Temperaturmessung, die einen temperaturabhängigen Leiter aufweist, in einem Auskoppelbereich;
- Fig. 8: einen schematischen Axialschnitt durch eine Vorrichtung zur faseroptischen Temperaturmessung, die einen temperaturabhängigen Leiter aufweist, in einem Einkoppelbereich; und
- Fig. 9: eine schematisch vergrößerte Ansicht der Hülle aus Fig. 8.

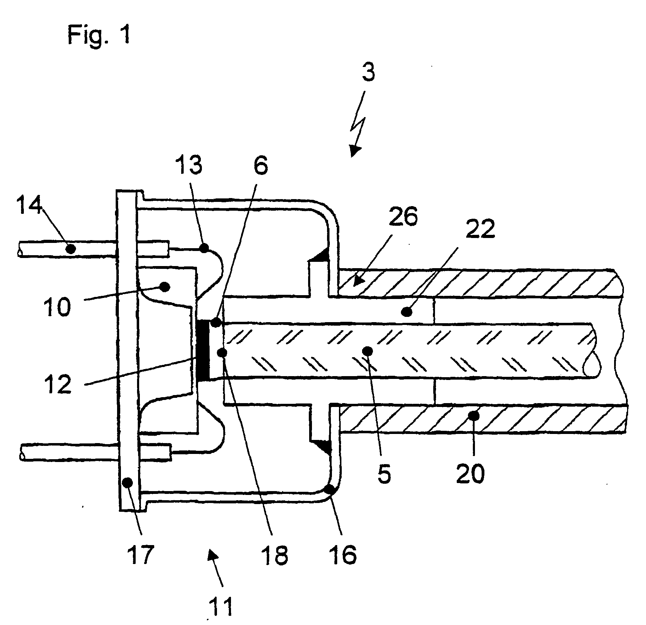

Ein Infrarot (IR)-Auskoppelbereich 3 einer Vorrichtung zur faseroptischen Temperaturmessung ist in Fig. 1 dargestellt. Eine Lichtleitfaser 5 ist von einem Detektor 10 beabstandet angeordnet. Anschlussdrähte 13 sowie Anschlussstifte 14 ermöglichen eine elektronische Verbindung des Detektors 10 mit einer nicht dargestellten Auswerteelektronik. Der Detektor 10 ist mittels einer Detektorabdeckung 16 gegenüber einem Detektorsockel 17 bzw. einer Abschlußplatine hermetisch dicht gekapselt. Detektorsockel 17 und Detektorabdeckung 16 bilden hierbei das Detektorgehäuse 11.

Aus der Lichtleitfaser 5 tritt an einer Auskoppelstelle 18 ein IR-Strahlungskegel 6 aus und fällt auf eine sensitive Schicht 12 des Detektors 10. Das Detektorgehäuse 11 weist kopfseitig eine Durchführung 26 für die Lichtleitfaser 5 auf, welche eine erste Ferrule 22 aufnimmt, in der wiederum die Lichtleitfaser 5 gehaltert ist. Außerhalb des Detektorgehäuses 11 ist die Lichtleitfaser 5 mit radialem Abstand von einem Schutzrohr 20 umgeben, das gegenüber der Ferrule 22 und/oder dem Gehäuse 11 abgedichtet ist.

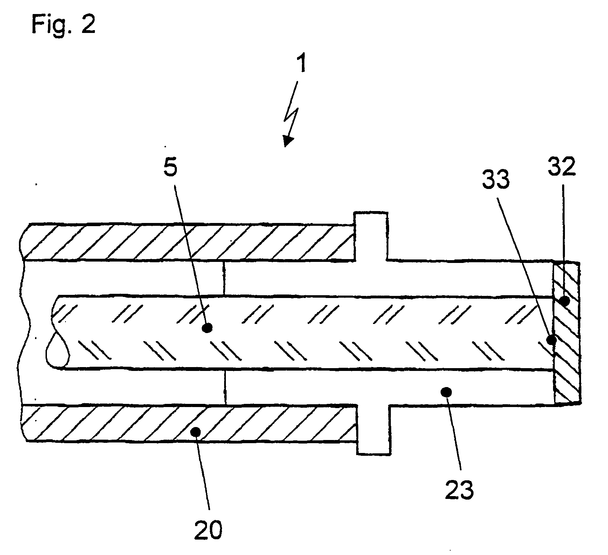

Fig. 2 zeigt einen IR-Einkoppelbereich 1 einer Vorrichtung zur faseroptischen Temperaturmessung. Eine Lichtleitfaser 5 ist in einer zweiten Ferrule 23 gehaltert, welche wiederum in das Schutzrohr 20 eingepasst ist. Die Lichtleitfaser 5 ist an ihrer Einkoppelfläche 33 durch ein optisches Filter 32 hermetisch abgeschlossen. Die Ferrule 23 bzw. 22 hat hierbei etwa die Form einer Steckhülse zur paßgenauen Aufnahme und inneren Durchführung der Lichtleitfaser, wobei ein externer, radialer Anlage- oder Befestigungsflansch gegenüber dem Schutzrohr 20 bzw. dem Inneren des Gehäuses 11 vorhanden ist.

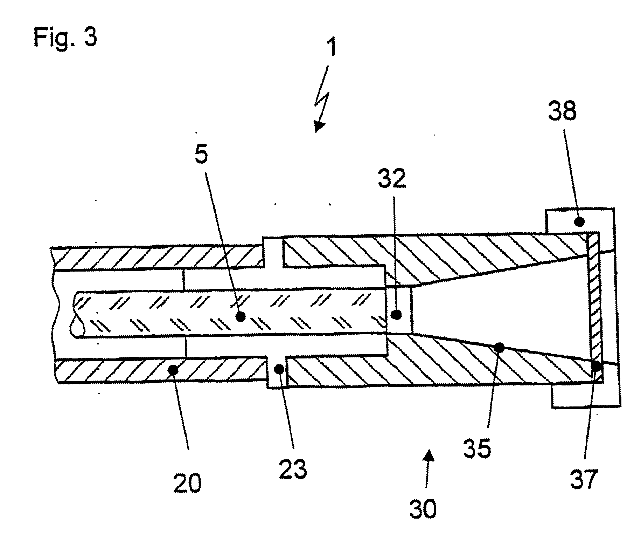

Fig. 3 verdeutlicht einen Einkoppelbereich 1, in dem vor der Lichtleitfaser 5 und dem optischen Filter 32 ein optisches System 30 angeordnet ist. Das optische System 30 ist hierbei als polierter, sich zur Lichtleitfaser 5 verjüngender Kegel 35 ausgebildet, welcher durch eine im Infraroten durchlässige Scheibe 37 abgedeckt ist. Die Scheibe wird durch eine Halterung 38 am optischen System 30 gehaltert. Das optische System 30 wiederum ist mit der zweiten Ferrule 23 verbunden.

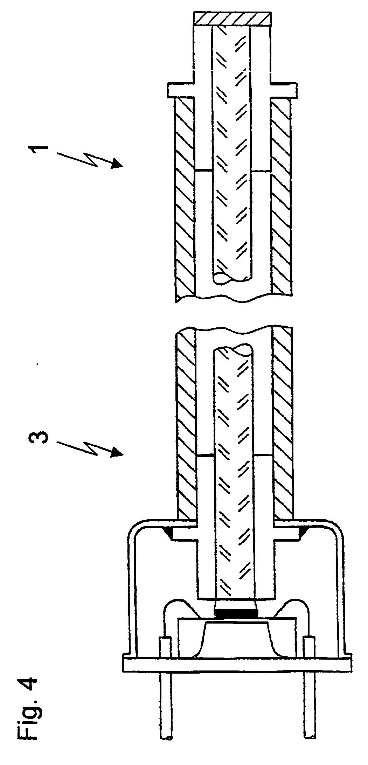

In Fig. 4 sind schematisch sowohl der Einkoppelbereich 1 gemäß Fig. 2 als auch der Auskoppelbereich 3 gemäß Fig. 1 einer Vorrichtung zur faseroptischen Temperaturmessung insgesamt dargestellt.

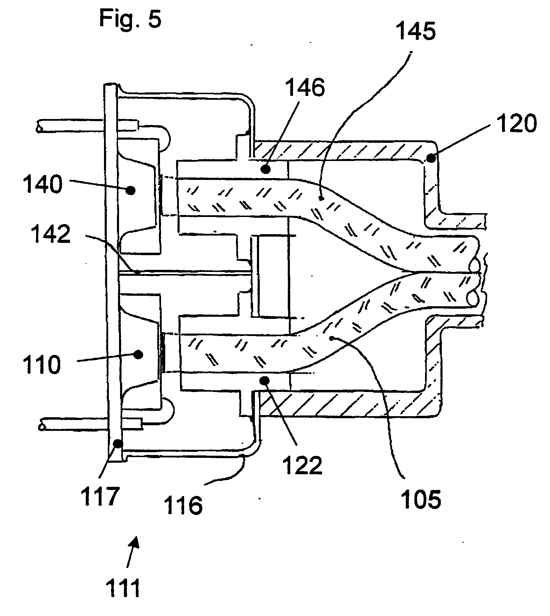

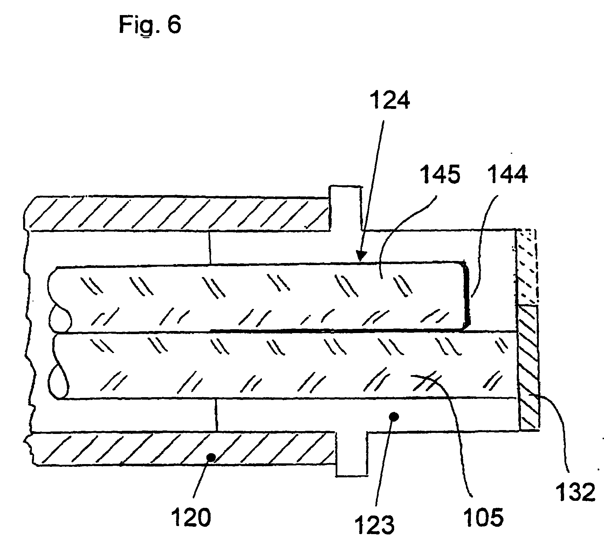

Die Fig. 5 und 6 zeigen ein weiteres Ausführungsbeispiel einer Vorrichtung zur faseroptischen Temperaturmessung, die eine Kompensationseinrichtung mit einer Kompensationsfaser 145 aufweist. Eine Lichtleitfaser 105 und die Kompensationfaser 145 verlaufen im Inneren eines Schutzrohres 120 parallel zueinander und unmittelbar nebeneinander. Die Lichtleitfaser 105 bildet dabei auf einen Detektor 110 ab, die Kompensationsfaser 145 hingegen auf einen Kompensationsdetektor 140. Der Detektor 110 und der Kompensationsdetektor 140 sind beide als Thermopiles ausgebildet und sind in einem gemeinsamen Detektorgehäuse 111 angeordnet. Der Detektor 110 und der Kompensationsdetektor 140 sind beide auf einem als gemeinsamer Detektorsockel 117 ausgebildeten gemeinsamen Träger aufgebracht. Das gemeinsame Detektorgehäuse 111 weist eine gemeinsame Detektorabdeckung 116 auf, die sowohl den Detektor 110 als auch den Kompensationsdetektor 140 beinhaltet. Zwischen dem Detektor 110 und dem Kompensationsdetektor 140 ist im gemeinsamen Detektorgehäuse 111 eine optische Trennscheibe 142 zur optischen Trennung oder Abschattung der beiden Detektoren 110, 140 vorgesehen.

In unmittelbarer Umgebung des gemeinsamen Detektorgehäuses 111 verzweigen sich die Lichtleitfaser 105 und die Kompensationsfaser 145 und treten getrennt voneinander durch eine in der gemeinsamen Detektorabdeckung 116 eingefaßte erste Ferrule 122 bzw. durch eine in der gemeinsamen Detektorabdeckung 116 eingefaßte Kompensationsfaserferrule 146 in das gemeinsame Detektorgehäuse 111 ein. Das Schutzrohr 120 weitet sich dabei entsprechend der Verzweigung der Lichtleitfaser 105 von der Kompensationsfaser 145 auf. Das Schutzrohr 120 schließt bündig an die Ferrulen 122, 146 und die gemeinsame Detektorabdeckung 116 an.

Auf der dem gemeinsamen Detektorgehäuse 111 abgewandten Seite (Fig. 6) ist das Schutzrohr 120 von einer zweiten Ferrule 123 abgeschlossen. Die zweite Ferrule 123 weist ein Sackloch 124 auf, in dem die Kompensationsfaser 145 eingeführt ist und dort endet. An dem im Sackloch 124 befindlichen Ende weist die Kompensationsfaser 145 eine Verspiegelung 144 auf.

Die parallel zur Kompensationsfaser 145 verlaufende Lichtleitfaser 105 tritt durch die zweite Ferrule 123 hindurch und wird von einem als optisches Filter 132 ausgebildeten Fenster abgeschlossen, welches durchmesserkleiner an der zweiten Ferrule 123 befestigt ist.

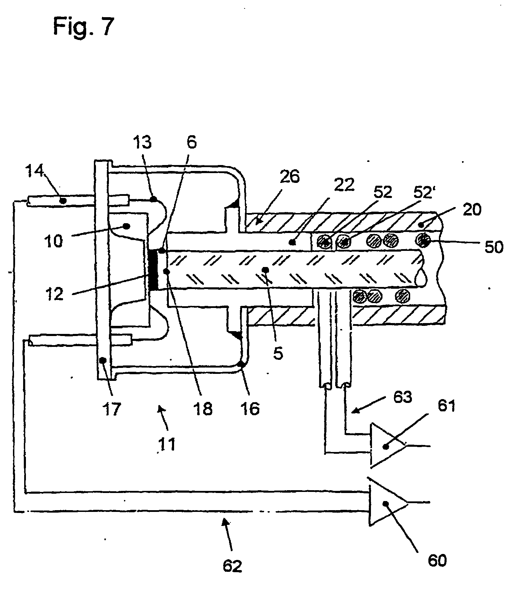

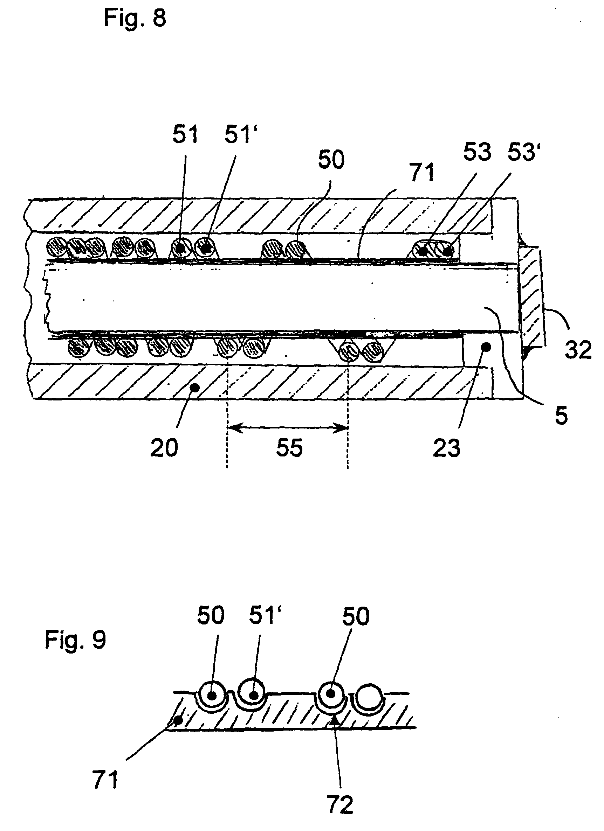

Die Fig. 7 bis 9 zeigen ein weiteres Ausführungsbeispiel einer Vorrichtung zur faseroptischen Temperaturmessung, die eine Kompensationseinrichtung mit einem temperaturabhängigen Leiter 50 aufweist. Einige der in diesem Ausführungsbeispiel beschriebenen Bauteile sind grundsätzlich gleich oder ähnlich aufgebaut wie in den in Fig. 1 bis 4 beschriebenen Ausführungsbeispielen. Diese Bauteile sind mit denselben Bezugszeichen gekennzeichen und werden an dieser Stelle nicht noch einmal beschrieben.

Im Inneren des Schutzrohres 20 ist um die Lichtleitfaser 5 ein als Draht ausgebildeter temperaturabhängiger Leiter 50 gewickelt. Die Wicklung ist dabei bifilar ausgebildet, so dass jeweils zwei Wicklungen 51, 51', die einer Hinleitung bzw. einer Rückleitung entsprechen, jeweils unmittelbar benachbart angeordnet sind. Am detektorseitigen Ende des Schutzrohrs 20 sind detektorseitige Drahtenden 52, 52' des bifilar gewickelten temperaturabhängigen Leiters 50 über erste Anschlussleitungen 63 mit einem Kompensationsverstärker 61 verbunden. Die mit einer Isolierung versehenen ersten Anschlussleitungen 63 treten hierzu in unmittelbarer Nähe der ersten Ferrule 22 durch das Schutzrohr 20 hindurch. Über mit den Anschlussstiften 14 verbundene zweite Anschlussleitungen 62 steht der Detektor 10 mit einem Messverstärker 60 in elektrischem Kontakt. Am Ausgang des Messverstärkers 60 liegt eine Messspannung an, die mit einer am Ausgang des Kompensationsverstärkers 61 anliegenden Kompensationsspannung zur Kompensation der thermischen Eigenstrahlung der Lichtleitfaser 5 verrechenbar ist.

Nahe der zweiten Ferrule 23 angeordnete, vom Detektor 10 beabstandete Drahtenden 53, 53' sind elektrisch miteinander verbunden. Die einzelnen Wicklungen des temperaturabhängigen Leiters 50 weisen eine Ganghöhe 55 zueinander auf, die in Richtung von der zweiten Ferrule 23 auf den Detektor 10 zu entsprechend der Dämpfung der Lichtleitfaser 5 abnimmt.

Die Lichtleitfaser 5 ist von einer biegsamen Hülle 71 umgeben, die Nuten 72 zur Aufnahme des als Draht ausgebildeten temperaturabhängigen Leiters aufweist.

## Patentansprüche

1. Vorrichtung zur faseroptischen Temperaturmessung mit einer Lichtleitfaser (5; 105), welche einen Strahlungs-Einkoppelbereich (1) und einen einem Detektor (10; 110) zugeordneten Strahlungs-Auskoppelbereich (3) aufweist, wobei die Lichtleitfaser (5; 105) im Infrarot (IR)-Spektralbereich mit hoher Transmission ausgebildet ist, und
einer Kompensationseinrichtung zur Berücksichtigung der thermischen Eigenstrahlung der Lichtleitfaser (5; 105) bei der Temperaturmessung, welche einen als Draht ausgebildeten temperaturabhängigen Leiter (50) aufweist, der um die Lichtleitfaser (5; 105) unter Ausbildung von Wicklungen (51, 51') vorgesehen ist,
**dadurch gekennzeichnet,**
**dass** die Wicklungen (51, 51') des Drahtes unterschiedliche Ganghöhen (55) aufweisen, die an das Dämpfungsverhalten der Lichtleitfaser (5; 105) angepasst sind.

2. Vorrichtung nach Anspruch 1,
**dadurch gekennzeichnet,**
**dass** die Lichtleitfaser (5; 105) im Bereich von etwa 2 µm bis etwa 20 µm, insbesondere im Wellenlängenbereich von 4 µm bis 18 µm mit hoher Transmission ausgebildet ist.

3. Vorrichtung nach einem der Ansprüche 1 oder 2,
**dadurch gekennzeichnet,**
**dass** die Lichtleitfaser (5; 105) eine Silberhalogenidfaser, insbesondere eine Faser basierend auf einer festen AgCl:AgBr-Lösung ist.

4. Vorrichtung nach einem der Ansprüche 1 bis 3,
**dadurch gekennzeichnet,**
**dass** der Detektor (10; 110) als Thermopile ausgebildet ist.

5. Vorrichtung nach einem der vorhergehenden Ansprüche,
**dadurch gekennzeichnet,**
- **dass** der Detektor (10; 110) ein hermetisch dichtes Gehäuse (11; 111) aufweist, das mit einem Inertgas gefüllt oder evakuiert ist, und
- **dass** das hermetisch dichte Gehäuse (11; 111) eine Durchführung (26) für die Lichtleitfaser (5; 105) aufweist.

6. Vorrichtung nach Anspruch 5,
**dadurch gekennzeichnet,**
**dass** in der Durchführung (26) für die Lichtleitfaser (5; 105) eine erste Ferrule (22; 122) vorgesehen ist, in der die Lichtleitfaser (5; 105) gehaltert ist.

7. Vorrichtung nach einem der vorhergehenden Ansprüche,
**dadurch gekennzeichnet,**
**dass** der Auskoppelbereich (3) eine Auskoppelstelle (18) aufweist, und
**dass** der Abstand zwischen der Auskoppelstelle (18) der Lichtleitfaser (5; 105) und einer sensitiven Schicht (12) des Detektors so eingestellt ist, dass ein aus der Lichtleitfaser (5; 105) austretender Strahlungskegel (6) die Fläche der sensitiven Schicht (12) des Detektors (10; 110) abdeckt.

8. Vorrichtung nach einem der vorhergehenden Ansprüche,
**dadurch gekennzeichnet,**
**dass** die Lichtleitfaser (5; 105) außerhalb des Detektorgehäuses (11; 111) von einer Schutzeinrichtung, insbesondere einem Schutzrohr (20; 120), umgeben ist.

9. Vorrichtung nach Anspruch 8,
**dadurch gekennzeichnet,**
- **dass** die in der Durchführung des Gehäuses (11; 111) vorgesehene erste Ferrule (22; 122) in das Schutzrohr (20; 120) eingepasst ist, und
- **dass** die Lichtleitfaser (5; 105) im IR-Einkoppelbereich (1) in einer zweiten Ferrule (23; 123) gehaltert ist, welche in das Schutzrohr (20; 120) eingepasst ist.

10. Vorrichtung nach einem der vorhergehenden Ansprüche,
**dadurch gekennzeichnet,**
**dass** die Lichtleitfaser (5; 105) im Einkoppelbereich (1) ein optisches Filter (32; 132), insbesondere ein Bandpassfilter mit einem Transmissionsbereich von 8 µm bis 14 µm aufweist,
**dass** das optische Filter (32;132) insbesondere mit einer Antireflexionsschicht versehen ist und/oder dass das optische Filter (32;132) als optisches Element, insbesondere als Linse, ausgebildet ist.

11. Vorrichtung nach einem der vorhergehenden Ansprüche,
**dadurch gekennzeichnet,**
**dass** im Einkoppelbereich (1) vor der Lichtleitfaser (5; 105) ein optisches System (30) angeordnet ist, das insbesondere als polierter Kegel (35) oder Paraboloid ausgebildet ist, und
**dass** das optische System (30) insbesondere eine im Infraroten durchlässige Scheibe (37) aufweist, die aus Germanium, Silizium, Saphir oder einer Verbindung eines oder mehrerer dieser Materialien besteht.

12. Vorrichtung nach einem der Ansprüche 1 bis 11,
**dadurch gekennzeichnet,**
**dass** die Kompensationseinrichtung eine Kompensationsfaser (145) aufweist,
die einem Kompensationsdetektor (140) zugeordnet ist, und
die im engen räumlichen und thermischen Kontakt zur Lichtleitfaser (5; 105) angeordnet ist.

13. Vorrichtung nach Anspruch 12,
**dadurch gekennzeichnet,**
**dass** die Kompensationsfaser (45) und die Lichtleitfaser (5) dieselbe Bauart und/oder Materialbeschaffenheit aufweisen, und
**dass** die Kompensationsfaser (145) an einem dem Kompensationsdetektor (140) beabstanden Ende verspiegelt und/oder verschlossen ist.

14. Vorrichtung nach einem der Ansprüche 12 oder 13,
**dadurch gekennzeichnet,**
**dass** der Kompensationsdetektor (140) und der Detektor (10; 110) baugleich sind und auf einem gemeinsamen Träger angeordnet sind.

15. Vorrichtung nach einem der Ansprüche 1 bis 14,
**dadurch gekennzeichnet,**
**dass** der Draht ein Nickeldraht ist.

16. Vorrichtung nach einem der Ansprüche 1 bis 15,
**dadurch gekennzeichnet,**
**dass** der Draht bifilar um die Lichtleitfaser (5; 105) gewickelt ist.

17. Vorrichtung nach einem der Ansprüche 1 bis 16,
**dadurch gekennzeichnet,**
**dass** die Lichtleitfaser (5; 105) von einer Hülle (71) umgeben ist, die Nuten (72) zur Aufnahme des Drahtes aufweist.

18. Vorrichtung nach einem der Ansprüche 1 bis 17,
**dadurch gekennzeichnet,**
**dass** die Kompensationseinrichtung Mittel zur Erzeugung eines Kompensationssignals und Mittel zur Korrektur des Messsignals des Detektors mit dem Kompensationssignal aufweist.

## Claims

1. Device for fibre optic temperature measurement with
an optical fibre (5; 105), which has a radiation coupling in area (1) and a radiation coupling out area (3) associated with a detector (10; 110), wherein
the optical fibre (5; 105) is constructed with high transmission in the infrared (IR) spectral range, and
a compensating device for taking account of the thermal characteristic radiation of the optical fibre (5; 105) during temperature measurement, which compensating device has a temperature-dependent conductor (50) constructed as a wire (50) that is placed round the optical fibre (5; 105) accompanied by the formation of windings (51, 51'),
**characterized in that**
the wire windings (51, 51') have different pitches (55), which are adapted to the damping behaviour of the optical fibre (5; 105).

2. Device according to claim 1,
**characterized in that**
the optical fibre (5; 105) is constructed with high transmission in the range from approximately 2 µm to approximately 20 µm, particularly in the wavelength range from 4 µm to 18 µm.

3. Device according to claim 1 or 2,
**characterized in that**
the optical fibre (5; 105) is a silver halide fibre, particularly a fibre based on a solid AgCl:AgBr solution.

4. Device according to one of the claims 1 to 3,
**characterized in that**
the detector (10; 110) is constructed as a thermopile.

5. Device according to one of the preceding claims,
**characterized in that**
the detector (10; 110) has a hermetically sealed casing (11; 111), which is filled with an inert gas or evacuated
and that the hermetically sealed casing (11; 111) has a passage (26) for the optical fibre (5; 105).

6. Device according to claim 5,
**characterized in that**
in the passage (26) for the optical fibre (5; 105) is provided a first ferrule (22; 122) in which is held the optical fibre (5; 105).

7. Device according to one of the preceding claims,
**characterized in that**
the coupling out area (3) has a coupling out point (18) and that the distance between the coupling out point (18) of the optical fibre (5; 105) and a sensitive coating (12) of the detector is set in such a way that a radiation cone (6) passing out of the optical fibre (5; 105) covers the surface of the sensitive coating (12) of the detector (10; 110).

8. Device according to one of the preceding claims,
**characterized in that**
the optical fibre (5; 105) is surrounded by a protective device, particularly a protective tube (20; 120), outside the detector casing (11; 111).

9. Device according to claim 8,
**characterized in that**
- the first ferrule (22; 122) provided in the passage of the casing (11; 111) is fitted into the protective tube (20; 120) and that
- the optical fibre (5; 105) in the IR coupling in area (1) is held in a second ferrule (23; 123), which is fitted into the protective tube (20; 120).

10. Device according to one of the preceding claims,
**characterized in that,**
in the coupling in area (1), the optical fibre (5; 105) has an optical filter (32; 132), particularly a band pass filter with a transmission range of 8 µm to 14 µm and
that the optical filter (32; 132) is particularly provided with an antireflection coating and/or the optical filter (32; 132) is constructed as an optical element, particularly as a lens.

11. Device according to one of the preceding claims,
**characterized** i**n that**,
in the coupling in area (1) upstream of the optical fibre (5; 105), is provided an optical system (30), which is in particular constructed as a polished cone (35) or paraboloid and that
the optical system (30) in particular has a disk (37) transparent in the infrared range and which is made from germanium, silicon, sapphire or a compound of one or more of these materials.

12. Device according to one of the claims 1 to 11,
**characterized in that**
the compensating device has a compensating fibre (145), which is associated with a compensating detector (140) and which is in close spatial and thermal contact with the optical fibre (5; 105).

13. Device according to claim 12,
**characterized in that**
the compensating fibre (45) and optical fibre (5) have the same design and/or material characteristics and that
the compensating fibre (145) is silvered and/or closed at the end remote from the compensating detector (140).

14. Device according to one of the claims 12 or 13,
**characterized in that**
the compensating detector (140) and detector (10; 110) have the same construction and are arranged on a common support.

15. Device according to one of the claims 1 to 14,
**characterized in that**
the wire is a nickel wire.

16. Device according to one of the claims 1 to 15,
**characterized in that**
the wire is wound in bifilar manner round the optical fibre (5; 105).

17. Device according to one of the claims 1 to 16,
**characterized in that**
the optical fibre (5; 105) is surrounded by a sleeve (71), which has grooves (72) for receiving the wire.

18. Device according to one of the claims 1 to 17,
**characterized in that**
the compensating device has means for producing a compensating signal and means for correcting the measuring signal of the detector with the compensating signal.

## Revendications

1. Dispositif de mesure de température à fibre optique avec une fibre optique (5; 105) qui comprend une zone d'entrée de rayons (1) et une zone de sortie de rayons (3) associée à un détecteur (10; 110), la fibre optique (5; 105) étant réalisée avec une transmission élevée dans le domaine spectral infrarouge (IR), et
avec un dispositif de compensation destiné à tenir compte du rayonnement thermique propre de la fibre optique (5; 105) lors de la mesure de température, qui comprend un conducteur (50) dépendant de la température conformé en fil, qui est prévu autour de la fibre optique (5; 105) en formant des enroulements (51, 51'),
***caractérisé en ce que***
les enroulements (51, 51') du fil présentent des hauteurs (55) variables qui sont adaptées au comportement d'atténuation de la fibre optique (5; 105).

2. Dispositif selon la revendication 1,
***caractérisé en ce que***
la fibre optique (5; 105) est réalisée avec une transmission élevée dans la plage d'environ 2 µm à environ 20 µm, en particulier dans la plage de longueurs d'onde de 4 µm à 18 µm.

3. Dispositif selon l'une quelconque des revendications 1 ou 2,
***caractérisé en ce que***
la fibre optique (5; 105) est une fibre en halogénure d'argent, en particulier une fibre basée sur une solution solide AgCl/AgBr.

4. Dispositif selon l'une quelconque des revendications 1 à 3,
***caractérisé en ce que***
le détecteur (10; 110) est conformé en thermopile.

5. Dispositif selon l'une quelconque des revendications précédentes,
***caractérisé***
- ***en ce que*** le détecteur (10; 110) comprend un boîtier (11; 111) hermétiquement fermé, qui est rempli d'un gaz inerte ou qui est mis sous vide, et
- **en ce que** le boîtier (11; 111) hermétiquement fermé comprend un passage (26) pour la fibre optique (5; 105).

6. Dispositif selon la revendication 5,
***caractérisé en ce que***
dans le passage (26) pour la fibre optique (5; 105) est prévue une première frette (22; 122) dans laquelle est retenue la fibre optique (5; 105).

7. Dispositif selon l'une quelconque des revendications précédentes,
***caractérisé***
***en ce que*** la zone de sortie (3) comprend un point de sortie (18), et
**en ce que** la distance entre le point de sortie (18) de la fibre optique (5; 105) et une couche sensible (12) du détecteur est ajustée de façon qu'un cône de rayons (6) sortant de la fibre optique (5; 105) couvre la surface de la couche sensible (12) du détecteur (10; 110).

8. Dispositif selon l'une quelconque des revendications précédentes,
***caractérisé en ce que***
la fibre optique (5; 105) est entourée à l'extérieur du boîtier de détecteur (11; 111) par un dispositif protecteur, en particulier un tube protecteur (20; 120).

9. Dispositif selon la revendication 8,
***caractérisé***
- ***en ce que*** la première frette (22; 122) prévue dans le passage du boîtier (11; 111) est introduite dans le tube protecteur (20; 120), et
- ***en ce que*** la fibre optique (5; 105) est retenue dans la zone d'entrée d'IR (1) dans une deuxième frette (23; 123) qui est introduite dans le tube protecteur (20; 120).

10. Dispositif selon l'une quelconque des revendications précédentes,
***caractérisé***
***en ce que*** la fibre optique (5; 105) comprend, dans la zone d'entrée (1), un filtre optique (32; 132), en particulier un filtre passe-bande avec une plage de transmission de 8 µm à 14 µm,
***en ce que*** le filtre optique (32; 132) est muni en particulier d'une couche anti-réfléchissante et/ou
**en ce que** le filtre optique (32; 132) est conformé en élément optique, en particulier en lentille.

11. Dispositif selon l'une quelconque des revendications précédentes, ***caractérisé***
***en ce qu*'**avant la fibre optique (5; 105) dans la zone d'entrée (1) est placé un système optique (30) qui est conformé en particulier en cône (35) poli ou paraboloïde, et
en ce que le système optique (30) comprend en particulier un disque (37) transparent dans l'infrarouge, qui est composé de germanium, de silicium, de saphir ou d'un composé d'un ou plusieurs de ces matériaux.

12. Dispositif selon l'une quelconque des revendications 1 à 11,
***caractérisé* en ce que**
le dispositif de compensation comprend une fibre de compensation (145)
qui est associée à un détecteur de compensation (140), et qui est placée en contact spatial et thermique étroit avec la fibre optique (5; 105).

13. Dispositif selon la revendication 12,
***caractérisé en ce que***
la fibre de compensation (45) et la fibre optique (5) présentent la même construction et/ou les mêmes caractéristiques de matériau, et
***en ce que*** la fibre de compensation (145) est rendue réfléchissante et/ou est fermée à une extrémité distante du détecteur de compensation (140).

14. Dispositif selon l'une quelconque des revendications 12 ou 13,
***caractérisé en ce que***
le détecteur de compensation (140) et le détecteur (10; 110) sont de même construction et sont placés sur un support commun.

15. Dispositif selon l'une quelconque des revendications 1 à 14,
***caractérisé en ce que***
le fil est un fil de nickel.

16. Dispositif selon l'une quelconque des revendications 1 à 15,
***caractérisé en ce que***
le fil est enroulé de manière bifilaire autour de la fibre optique (5; 105).

17. Dispositif selon l'une quelconque des revendications 1 à 16,
***caractérisé en ce que***
la fibre optique (5; 105) est entourée d'une gaine (71) qui comprend des rainures (72) destinées à recevoir le fil.

18. Dispositif selon l'une quelconque des revendications 1 à 17,
***caractérisé en ce que***
le dispositif de compensation comprend des moyens de production d'un signal de compensation et des moyens de correction du signal de mesure du détecteur avec le signal de compensation.
